(19) Europäisches Patentamt
European Patent Office
Office européen des brevets

(11) **EP 2 789 984 B1**

(12) **EUROPEAN PATENT SPECIFICATION**

(45) Date of publication and mention
of the grant of the patent:
**08.06.2016 Bulletin 2016/23**

(51) Int Cl.:
**G01D 5/20** *(2006.01)*     **G01D 5/244** *(2006.01)*
**G01D 5/245** *(2006.01)*     **G01D 5/249** *(2006.01)*
**H02K 41/03** *(2006.01)*

(21) Application number: **14163755.3**

(22) Date of filing: **07.04.2014**

(54) **Method and apparatus for identifying the absolute starting position of a linear electric motor**

Verfahren und Vorrichtung zur Identifizierung der absoluten Start-Position eines elektrischen Linearmotors

Procédé et appareil pour identifier la position de démarrage absolue d'un moteur électrique linéaire

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2013 IT MI20130530**

(43) Date of publication of application:
**15.10.2014 Bulletin 2014/42**

(73) Proprietor: **Nise S.r.l.**
**40012 Calderara di Reno (Bologna) (IT)**

(72) Inventor: **Gavesi, Marco**
**40121 BOLOGNA (IT)**

(74) Representative: **Tansini, Elio Fabrizio**
**Bugnion S.p.A.**
**Viale Lancetti 17**
**20158 Milano (IT)**

(56) References cited:
**EP-A2- 1 978 633**     **EP-A2- 2 052 968**
**WO-A2-2009/120510**     **US-A1- 2012 098 469**

**Description**

FIELD OF APPLICATION

The object of the present invention is a method and an apparatus for identifying the position of a linear electric motor.

In particular, the object of the present invention is an apparatus for identifying the position of a synchronous linear electric motor.

Even more particularly, the object of the present invention is an apparatus for identifying the position of a linear electric motor of a brushless type with permanent magnets.

Brushless motors do not need sliding electrical contacts on the drive shaft for operation. In fact, switching of the current circulating in the windings no longer takes place mechanically (by means of the sliding contacts), but electronically instead.

Brushless motors always operate under conditions of optimal performance, and as they do not need to generate the magnetic field of the rotor, they offer greater efficiency.

PRIOR ART

In general, in order for linear motors to operate correctly, the use of a linear type of encoder is required, typically connected mechanically to the exterior of the motor body where the windings are found. These position transducer systems make use of magnetic, optical or inductive types of techniques for position measurement.

To enable quicker applicability of linear motors, it is possible to resort to integration of this transduction technique inside the motor, partly sacrificing the level of accuracy.

For example, for measurement of the position of a tubular linear motor, when this takes place by means of integrated electronics in the motor, the utilisation of the magnetic field generated by rare earth permanent magnets of the motor and the measurement thereof by means of a pair of Hall-effect sensors normally out of phase by a 90° angle, is a known technique.

There are several variations in the prior art, with different phase shift values between the sensors and different techniques of compensation for variations due to assembly tolerances and to tolerances due to the permanent magnets.

The mechanical construction of the permanent magnets generates a field of a quasi-sinusoidal type, which, detected by the magnetic sensors that are typically aligned along a direction parallel to the longitudinal axis of the motor, creates, in turn, a signal of the analogue type, the sinusoidal period of which is equal to the electric step of the motor and represents periodic position information about said step.

If a flat linear motor is considered, the technique is similar and it always requires the use of Hall-effect sensors for measurement of the field generated by the permanent magnets, in this case of a flat shape rather than cylindrical.

However, this measurement which takes place by means of the pair of sensors, is a relative measurement, that is, it depends on a particular measurement of the initial position of the motor.

Measurement of the position is normally of an incremental type, and it becomes absolute only with respect to a zero position obtained by means of external sensors: mechanical, magnetic, inductive or capacitive proximity switches, or by means of a mechanical stop.

There are known embodiments in the prior art in which zero detection techniques are developed, without the use of external sensors or mechanical stops, through detection of the edge effect (created by the end of the magnets inside the rod of the tubular linear motor).

However, these techniques require complex processing for "zero" detection, which proves to be uneconomical in concrete terms and complex in terms of maintenance/programming.

Furthermore, in many application, however, the zero position search with movement of the motor is not possible or it is difficult to implement, particularly in multi-axis machines.

In multi-axis machines or in machinery that requires a quick start-up, repositioning has very detrimental effects in terms of time and costs, as a greater number of sensors are needed to ensure proper and reliable repositioning.

In other words, detection of the absolute identification of the position of a linear motor is difficult to implement owing to the possible intrinsic complexity of the machinery to be checked and owing to the complexity of the procedure for calculation/processing of that position.

There are solutions in the prior art for the absolute measurement of the position of a linear motor. However, these solutions are all realised through non-integrated solutions based on external encoded magnetic or optical bands.

These techniques are not comparable with the technique disclosed in the present invention, as they are addressed to machines with operating principles that are different and not transferrable to the apparatus of the present invention, in which there are no external magnetic or optical bands present for measurement detection.

EP1978633 A2 discloses a movable member moved in a preset direction In a linear motor. A characteristic-changeposition-detecting unit detects a position where the magnetic characteristic of the magnets has abruptly changed. The position detected Is used as an origin-setting reference position. A reference position for the absolute position of the magnetic linear encoder is set based on the reference position,

Therefore, the need clearly emerges to enable detection of an absolute measurement, particularly in automatic machines that operate by means of electronic cams where the fact that there Is no zeroing with movement of the axis upon restarting the machine is of great use, also to prevent collisions between the axes and/or requests for predefined movements between the axes to allow for the zeroing thereof.

In light of all the drawbacks mentioned, an aim of the present invention Is therefore to realize an absolute type of measurement system for measuring the position of a linear motor that makes the information concerning the absolute position available instantaneously.

Another aim of the present invention is to realize an absolute type of measurement system for measuring the position of a linear motor that ensures effective and reliable measurement of the position without any movement of the axis.

A further aim of the present invention Is to realise an easily-implemented absolute type of measurement system for measuring the position of a linear motor.

## SUMMARY OF THE INVENTION

These and other aims are achieved by an identification method and apparatus for identifying the absolute starting position of a linear electric motor according to that which is recited in the attached claims.

The invention, as disclosed, achieves the following technical effects:

- simpler structure of the apparatus;
- structure integrated in the body of the linear motor;
- efficient and dynamic operation;
- optimised motor operation, particularly because

  o it enables prevention of an axis/axes repositioning movement during start-up;
  o it enables compensation for residual errors of nonlinearity by also mapping the distortion function together with the thresholds for differentiation of the electric steps, and then utilising it for the correction procedure.

The invention also discloses a linear electric motor comprising the cited measurement apparatus.

The technical effects mentioned and other technical effects of the invention will emerge in more detailed form in the description provided herein below of an embodiment provided by way of approximate, non-limiting example with reference to the accompanying drawings.

## BRIEF DESCRIPTION OF THE DRAWINGS

Figure 1a is a perspective view of the linear motor comprising the apparatus of the invention.
Figure 1b is a sectional view of the motor appearing in Figure 1 a along a plane A-A parallel to the sliding plane of the rod of the motor.
Figure 1c is an enlarged view of Figure 1 b.
Figure 2a shows signals representative of the position of the electric motor, as detected by the apparatus appearing in the preceding figures.
Figure 2b shows mapping of the signals shown in Figure 2a in an angular rotation vector (V1).

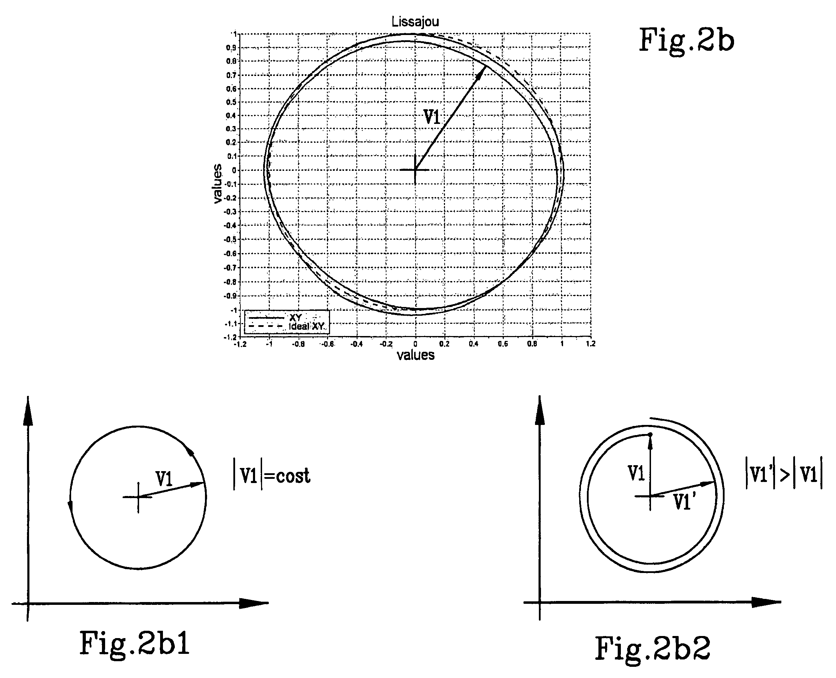

Figure 2b1 is a first example of mapping (ideal case).
Figure 2b2 is a second example of mapping (case with edge effects).

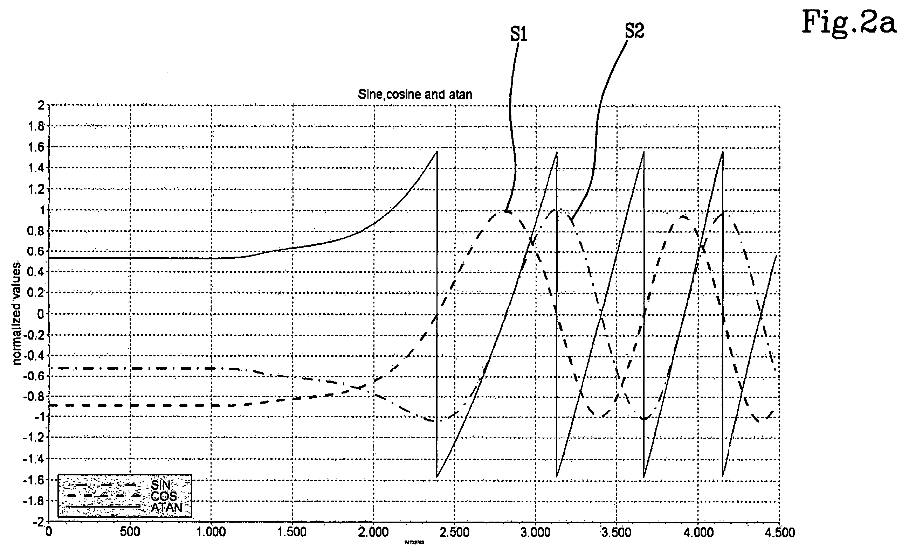

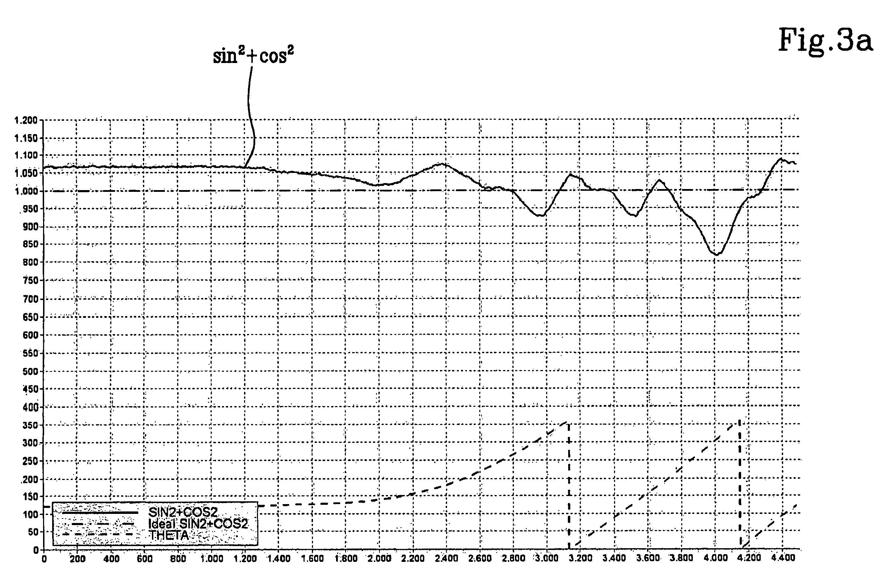

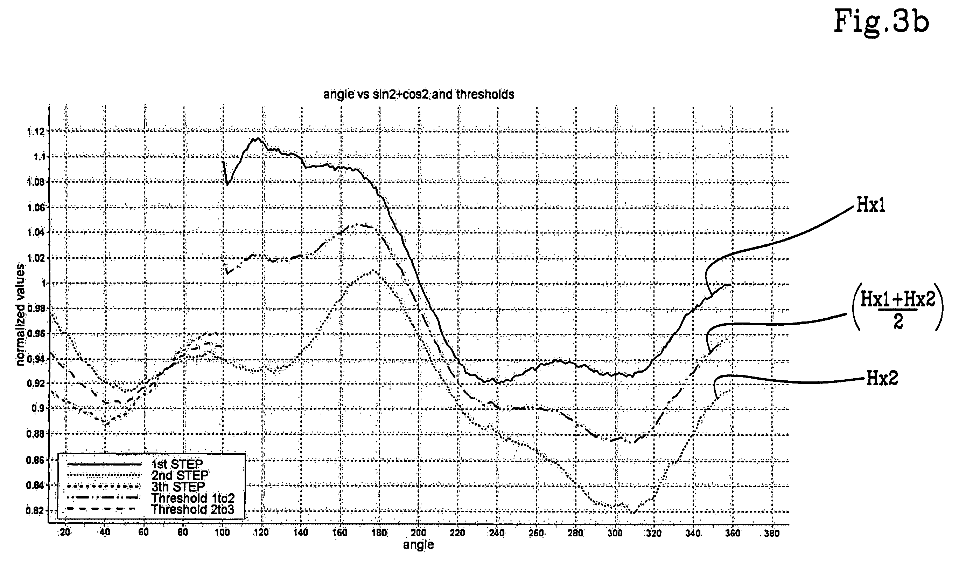

Figures 3a and 3b are graphs representing the pattern of the vector of Figure 2a.

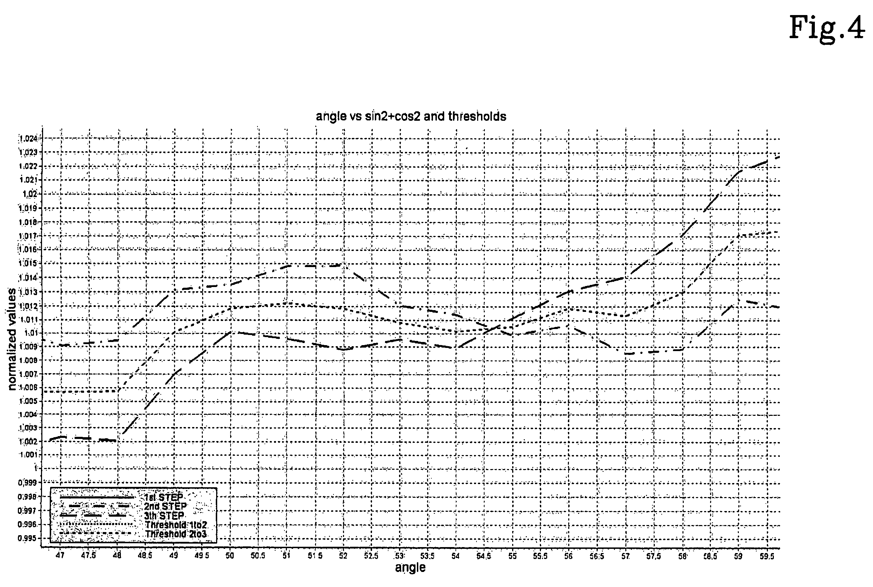

Figure 4 is a detail of the graph appearing in Figure 3b.

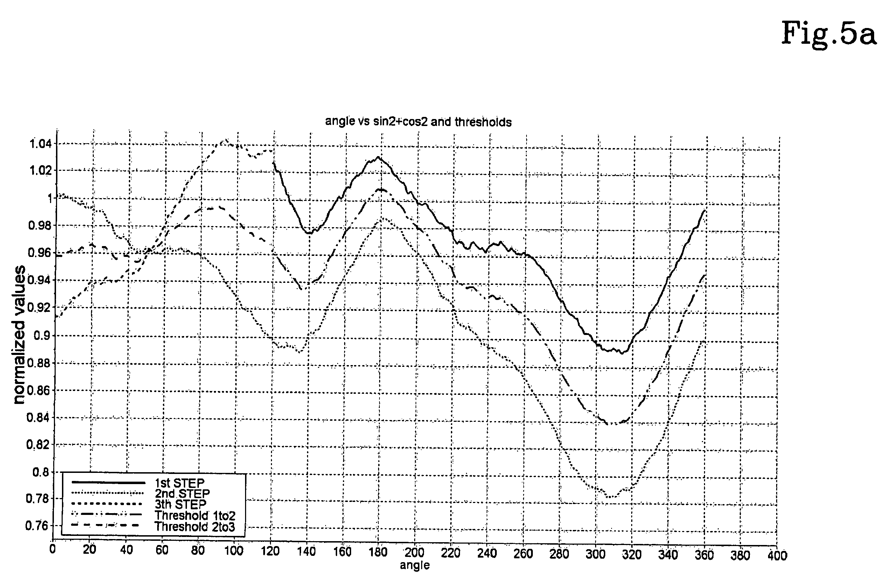

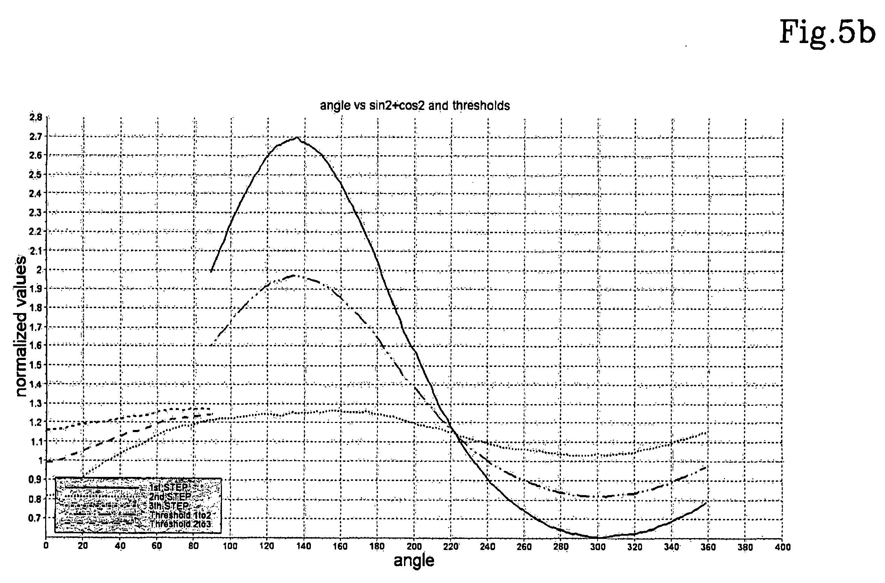

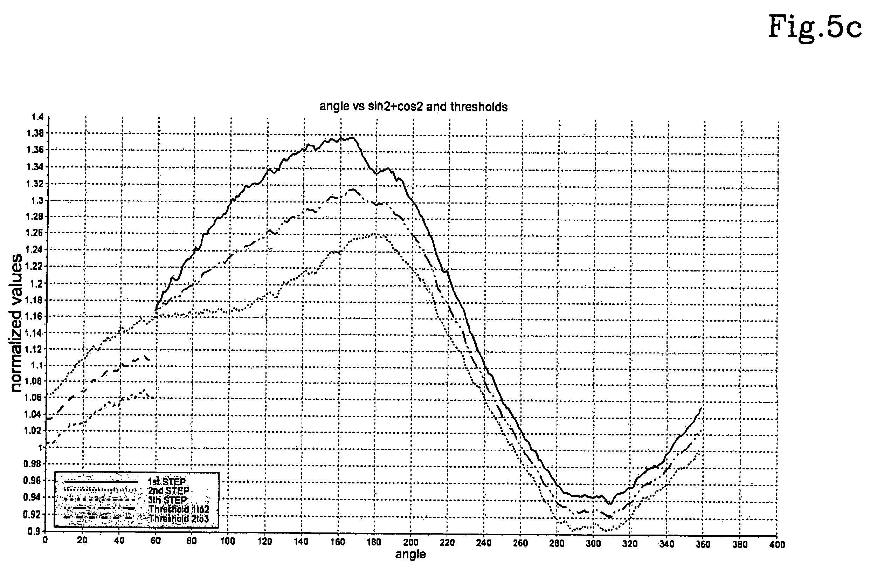

Figures 5a, 5b and 5c are graphs representing the pattern of the vector of Figure 2a as a function of the number and dimensions of the magnets present in the apparatus.

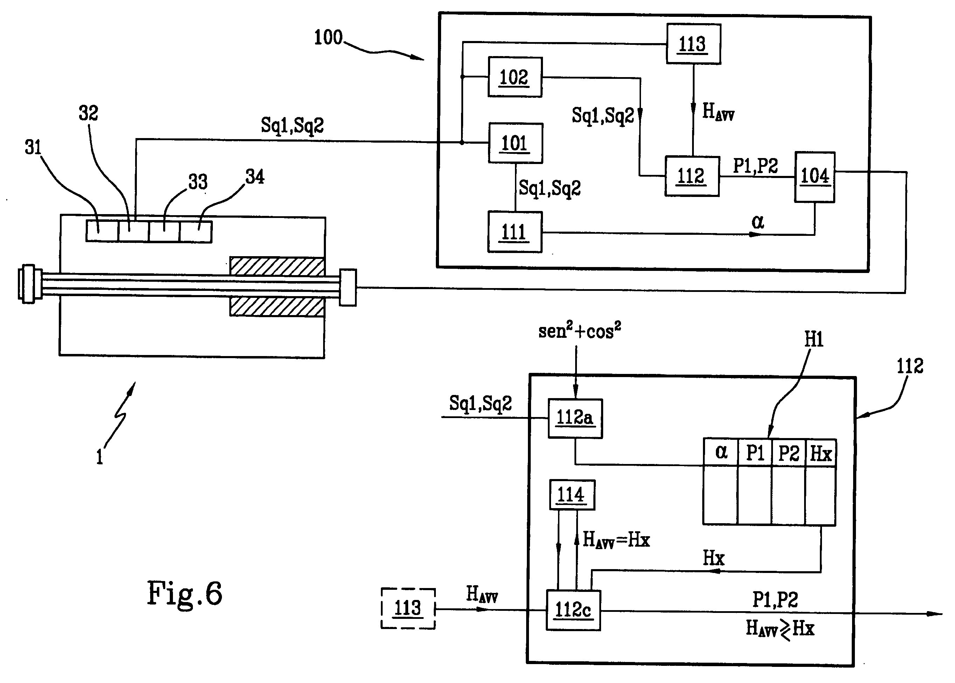

Figure 6 is a schematic block diagram of the apparatus of the invention, complete with the control unit.

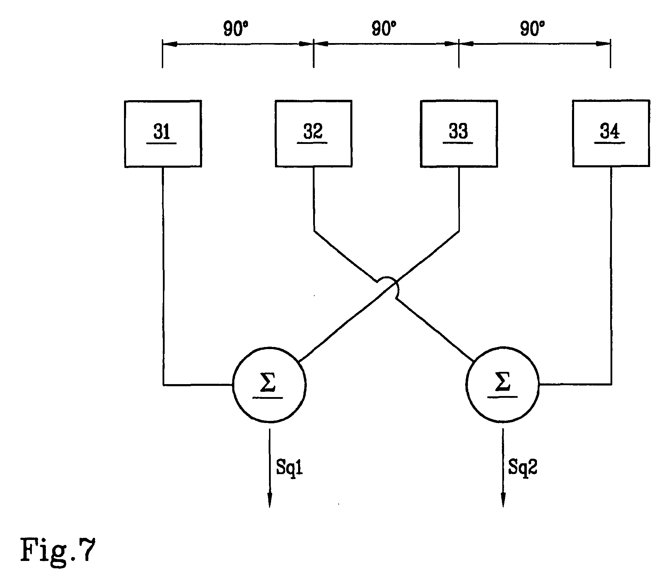

Figure 7 is a schematic representation of signal processing of signals produced in the system of the invention.

## DETAILED DESCRIPTION OF THE INVENTION

The present invention applies to the technical sector of conventional brushless synchronous linear motors with permanent magnets where the permanent magnets are contained in a hollow body of the linear electric motor rather than around a rotor, as in electric motors that are not linear. The invention consists of an apparatus for measuring the absolute position of a linear electric motor 1.

The invention further consists of a linear electric motor 1 comprising this apparatus.

In particular, this linear electric motor 1 can be tubular.

Alternatively, this linear electric motor 1 can be flat.

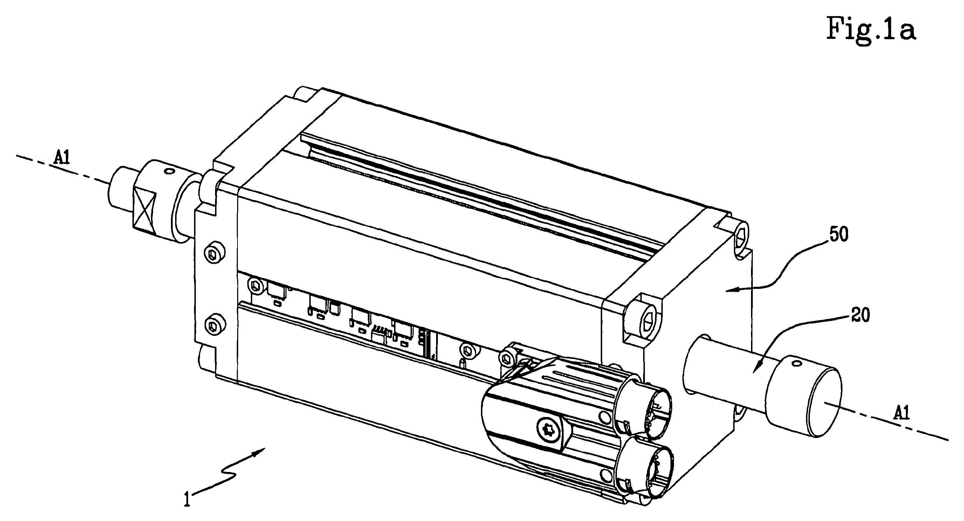

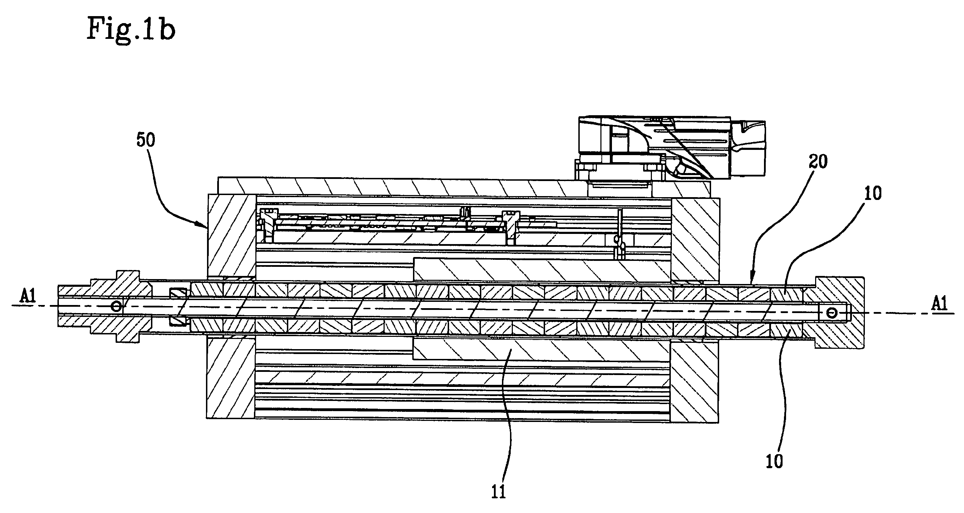

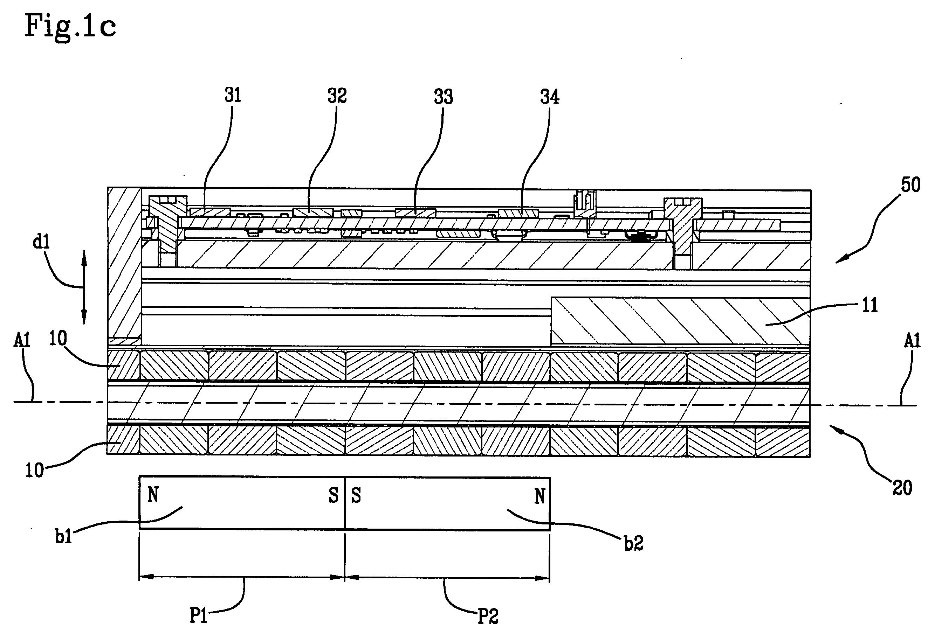

With particular reference to the set of Figures 1a, 1b and 1c, the linear electric motor 1 comprises a body 50 that extends along a longitudinal axis A1-A1 of the motor 1.

The body 50 is configured to contain a rod 20 that is able to move coaxially with the longitudinal axis A1-A1.

Preferably, the rod is guided as it slides in the motor by means of bearings made of an engineering polymer.

The body 50 further contains permanent magnets 10 configured to create a magnetic field and to generate a signal of a quasi-sinusoidal type upon movement of the rod 20.

This signal depends upon a variation of the magnetic field dictated by the relative movement of the magnets 10 and windings 11, more precisely by a movement of the magnets 10 integral with the rod 20, with respect to the windings 11 that are fixed and integral with the body of the motor.

In particular, the period of the quasi-sinusoidal signal is representative of the electric step P of the motor.

In other words, the permanent magnets 10 are integral with the rod 20. The windings 11 are housed in the body 50 and are at least partially associated with the permanent magnets 10.

The relative movement of the magnets 10 and windings 11 creates a variable magnetic field that is detectable by a plurality of sensors 31, 32, 33, 34.

The permanent magnets are assembled in blocks, for example b1 and b2 (fig. 1 c) so as to obtain an electric step of the motor.

In one embodiment, the blocks b1, b2 have a total linear dimension of 6 cm, each having a linear dimension of 3 cm.

In another embodiment, the blocks b1 and b2 are alternated with discs made of ferromagnetic material, preferably SMC (soft magnetic composites).

The example showing the polarisation of the permanent magnets 10 in Figure 1c envisages that the blocks b1 and b2 are in contact with each other so that the S (south) polarities face each other; in other words, it is envisaged that there is repulsion at the border between the two blocks so as to create the electric step of the motor, particularly to differentiate between a first electric step P1 and a second electric step P2.

The rod 20 is preferably thin-walled.

The rod 20 is preferably a thin-walled tube made of stainless steel.

In one embodiment, the rod 20 has a diameter of 16 mm and a thickness of 0.5 mm.

In an alternative embodiment, the rod 20 has a diameter of 25 mm and a thickness of 0.5 mm.

In another embodiment, the rod 20 has a diameter of 35 mm and a thickness of 0.5 mm.

In general, the size of the diameter can be configured according to the power we wish to obtain from the motor.

The body 50 of the electric motor 1 further comprises windings 11 housed therein.

In particular, the windings 11 are at least partially associated with the permanent magnets 10.

In other words, depending upon the positioning of the permanent magnets 10 sliding integrally with the rod 20, the windings 11 can completely face the permanent magnets 10 or partially face the permanent magnets 10.

By way of example, in the first case, the rod 20 has brought the permanent magnets 10 into a position with complete overlapping of the magnetic field thereof with that of the windings 11.

In the second case, the rod 20 has brought the permanent magnets 10 into a position with partial overlapping of the magnetic field thereof with that of the windings 11.

According to the invention, the apparatus of the invention advantageously comprises a plurality of magnetic field sensors 31, 32, 33, 34 mounted in the body 50 in a position that is distal from the permanent magnets 10, with respect to the windings 11.

In other words, the plurality of magnetic field sensors 31, 32, 33, 34, the windings 11 and the permanent magnets 10 are mounted in the body 50, at a progressively decreasing distance, respectively, with respect to the rod 20, along a direction transverse to the rod 20.

The plurality of sensors 31, 32, 33, 34 are mounted in the body 50 so that each sensor faces the permanent magnets 10 without interposition of the windings 11.

In other words, the sensors 31, 32, 33, 34 are distributed along the electric steps P1 and P2 and thus they cover an area along the permanent magnets 10 that extends from the magnetic poles N to S and S to N.

In other words, the board on which the sensors are mounted is substantially unaffected by the magnetic field of the windings 11, that is, it is, linearly offset with respect to the windings in a direction parallel to the longitudinal axis A1-A1.

The relative movement of the magnets 10 and windings 11 creates a variable magnetic field that is detectable by the plurality of sensors 31, 32, 33, 34, particularly by a first pair of sensors 31, 33 and a second pair of sensors 32, 34.

The sensors utilised consist of a first and a second pair of Hall-effect sensors out of phase by a 180° angle.

With particular reference to Figure 7, the first pair of Hall sensors comprises the sensors 31 and 33, whereas the second pair comprises the sensors 32 and 34.

Each sensor in each separate pair is in quadrature, that is, out of phase by 90°, with the other sensor in the same pair.

Moreover, the board on which the sensors are mounted is at a predefined distance d1 (fig. 1 c) from the permanent magnets 10 so that the signal generated by the sensors 31, 32, 33, 34 as a function of the magnetic field detected is a quasi-sinusoidal signal, that is, a signal which in the subsequent processing can be equated to a pure sinusoidal signal.

In particular, the predefined distance d1 depends upon the degree of magnetisation of the magnets; this distance d1 is preferably greater than 17 mm.

In particular, the sensors are mounted at the predefined distance d1 in such a manner that the signal generated is a low-distortion signal in quadrature Sq, with the characteristics of a sine associated with a cosine, which provided as input to a control unit of the motor 1 and suitably processed, makes it possible to obtain the position of the motor itself.

The apparatus according to the invention comprises a control unit 100 in data communication with the plurality of sensors 31, 32, 33, 34.

This control unit is configured to determine the position of the motor 1. The control unit 100 comprises a first acquisition module 101 configured to acquire quadrature signals Sq1, Sq2 from the plurality of sensors 31, 32, 33, 34 (fig. 2a).

With particular reference to Figure 7, the first sine signal Sq1 is the sum of the outputs of the two Hall sensors 31 and 33, whereas the second cosine signal Sq2 is the sum of the outputs of the two Hall sensors 32 and 34.

In other words, each signal Sq1, Sq2 is the sum of contributions generated by sensors that are out of phase by 180°.

Advantageously, according to the invention, the rod 20 is able to be moved between at least two positions. By way of description, we can identify different positions in which the rod may be found upon start-up of the motor.

In a first position I, the plurality of sensors 31, 32, 33, 34 are capable of generating a first substantially unaltered quadrature signal Sq1, that is, a quasi-sinusoidal signal, as a function of the magnetic field detected.

In other words, the respective sine S1 and cosine S2 components are quasi-sinusoidal and remain of a substantially unaltered amplitude.

In yet other words, the signal Sq1 indicates that the rod 20 is in an area that is unaffected by disturbances in the magnetic field generated by the magnets 10 with the windings 11.

In other words, the linear motor is in the electric step P1 (fig. 1c), where the electric step P1 corresponds to the first period of Sq.

In a second position II, the plurality of sensors 31, 32, 33, 34 are capable of generating a second signal Sq2 in an altered form as a function of the magnetic field detected, that is, said second signal is altered in form from that of a pure sinusoidal signal.

In other words, the respective sine S1 and cosine S2 components vary in amplitude.

In yet other words, this signal Sq2 indicates that the rod 20 is in an area affected by disturbances in the magnetic field generated by the magnets 10 with the windings 11.

Expressed differently, the plurality of sensors 31, 32, 33, 34 bring about an "edge effect" in the signal Sq2, that is, a variation in the amplitude of the signals S1 and S2 due to disturbances in the magnetic field generated by the magnets 10 with the windings 11.

Therefore, the linear motor is in the electric step P2 (fig. 1 c), where P2 corresponds to the second period of Sq.

To sum up, the signal Sq1, Sq2 is representative of the double electric step P1, P2 of the motor 1.

The control unit 100 comprises a second acquisition module 102.

The second acquisition module 102 is configured to detect the electric step P1 or P2 from the quadrature signal Sq1, Sq2 acquired from the plurality of sensors 31, 32, 33, 34.

Advantageously, according to the invention, the plurality of sensors 31, 32, 33, 34 are positioned so as to face the permanent magnets 10 over the two electric steps P1, P2, of the linear motor 1.

In other words, the apparatus of the invention is configured with windings 11 that are not interposed between the sensors 31, 32, 33, 34 and the magnets 10.

The technical effect achieved is that the signal detected is more precise in terms of amplitude errors, given that the processing of the signal Sq in the control unit is carried out as a function of the value assumed on two electric steps of the motor.

With reference to Figure 2a, an example of the signal detected is shown, particularly from the quadrature components S1 and S2 thereof.

Another technical effect achieved is that the electric motor 1 operates even without compensating the edge effects.

In this specific case, the control unit 100 comprises a first calculation module 111 configured to determine a position of the electric motor 1 as a function of the acquired quadrature signals Sq1, Sq2.

The calculation module 111 is configured to calculate this position by calculating an angular phase shift value $\alpha$ of the signals Sq1, Sq2, with respect to a predefined zero position, that is, with respect to the electrical zero within the electric step.

The first calculation module 111 is configured to calculate the angular phase shift value $\alpha$ by means of an arctg function of the values of said quasi-sinusoidal signals S1, S2 of the quadrature signals Sq1, Sq2, thereby determining the position of the motor within an electric step P1, P2.

In other words, $\alpha$ = arctg S1/S2

According to the invention, in the preferred embodiment of the invention, the tolerances/edge effects are compensated.

In other words, spatial misalignments are not eliminated as occurs in some embodiments of the prior art, but they are compensated so as not to determine errors that could "corrupt" the position readings.

The apparatus of the invention carries out compensation using four sensors that detect movements of the rod 20 on at least two steps at a time.

The magnetic field generated is measured by the sensors 31, 32, 33, 34, particularly Hall-effect sensors, with a quasi-sinusoidal signal that is advanced (sine) S1 and one that is delayed (cosine) S2.

In other words, the quadrature signal Sq1, Sq2 comprises a first sine signal (S1) and a second cosine signal (S2), which are 90° out of phase. At this point, once the angular phase shift value $\alpha$ has been determined, it is necessary to understand in which electric step, P1 or P2, the movement of the motor is taking place in order to detect the exact position.

In the case in which the movement is taking place only in the first electric step P1, then the absolute value consists of the simple calculation of arctg, as carried out by the calculation module 111 described hereinabove.

As an alternative, if movement is not taking place in the first electric step P1, the electric step involved must be determined.

To do this, the quadrature signals Sq1 and Sq2 are mapped in the angular rotation vector V1 thereof.

This mapping procedure is realised in the production stage of the motor or when the axis is mounted for the first time (only once).

The mapping and the operation of the linear electric motor are carried out with the rod 20 blocked in rotation.

A second calculation module 112 in the control unit 100 is generally configured to determine a position POS of the electric motor as a function of the values generated by the first calculation module 111 (the angular phase shift value $\alpha$) and by the second acquisition module 102 (the electric step P1 or P2).

In particular, the second calculation module 112 is configured to determine the threshold value Hx.

To do this, the second calculation module 112 comprises a mapping module 112a configured to map the quadrature signal Sq1, Sq2 in an angular rotation vector V1 by means of a mathematical function, i.e., sin^2+cos^2, as shown in Figure 2b.

The mapping module 112a is also configured to calculate the angular phase shift value $\alpha$ and the respective values of the mapped quadrature signals (Sq1, Sq2).

In other words, the period of Sq corresponds to the electric step P1 of the electric motor and to the 360° -angular rotation of V1; therefore, the angular rotation vector V1 in its first revolution corresponds to the electric step P1 of the electric motor. Sq, indicated by Sq1 in the first step, shall have a calculated value H1i (i = 0 - 360°) of sin^2+cos^2 given by the quadratic sum of the components S1 (in step P1) and S2 (in step P1).

The angular rotation vector V1 in its second revolution corresponds to the electric step P2 of the electric motor. Sq, indicated by Sq2 in the second step, shall have a calculated value H2i (i = 0 - 360°) of sin^2+cos^2 given by the quadratic sum of the components S1 (in the electric step P2) and S2 (in the electric step P2).

It is also possible that the angular rotation vector V1 also completes a third revolution.

In its third revolution, the angular rotation vector V1 corresponds to the electric step P3 of the electric motor. Sq, indicated by Sq3 in the third step, shall have a calculated value H3i (i = 0 - 360°) of sin^2 + cos^2 given by the quadratic sum of the components S1 (in the electric step P3) and S2 (in the electric step P3).

The results are shown for the sake of clarity in the following table, which has 360 rows, one for each angle of possible travel of the angular rotation vector.

| α | Step P1 | Step P2 | Step P3 | Hx1 | Hx2 |
|---|---|---|---|---|---|
| 30° | H11=(Sin^2+Cos^2)(30°) | H21=(Sin^2+Cos^2)(30°) | H31=(Sin^2+Cos^2)(30°) | (H11+H21)/2 | (H21+H31)/2 |
| 45° | H12=(Sin^2+Cos^2)(45°) | H22=(Sin2+ Cos2)(45°) | H32=(Sin^2+Cos^2)(45°) | (H12+H22)/2 | (H22+H32)/2 |
| 60° | H13=(Sin^2+Cos^2)(60°) | H23=(Sin^2+Cos^2)(60°) | H33=(Sin^2+Cos^2)(60°) | (H13+H23)/2 | (H23+H33)/2 |
| ... | ... | ..... | | | |

The mapping module 112a is also configured to calculate the first threshold Hx1=(H1+H2)/2, which is representative of an intermediate value of the quadrature signal Sq1, Sq2 over the first electric step P1 and the second electric step P2 of the electric motor 1.

The mapping module 112a is further configured to calculate the second threshold Hx2=(H2+H3)/2, which is representative of an intermediate value of the quadrature signal Sq1, Sq2 over the second electric step P2 and the third electric step P3 of the electric motor 1.

Mapping can yield two different results, in which more or less intensive distortion is always present and which depends on the mechanics, on uneven magnetisation of the magnets, on assembly tolerances, etc.

An initial result is shown in Figure 2b1.

This result can be considered as almost ideal.

This case comes very close to the ideal case, as the four sensors mediate the distortion effects mentioned, determining a low distortion zone.

The ideal signal is a circle designed by the angular rotation vector v1 and that remains such with the advancement of the rod with respect to the body of the motor; in other words, it is a substantially perfect circle that closes after 360°, that is, at the end of the firstelectric step P1.

This case is what takes place when the rod has not yet brought one end thereof into a position so that the sensor closest to the rod is able to detect the end of the magnet integral with the rod.

A second result, the distorted result, is shown in Figure 2b2.

In this case, the effect of the distortion is detectable and not negligible.

In this case, the circle of the angular rotation vector tends to "widen", that is, the intensity of the vector V1 varies, determining for example a vector V1' that is such that $|V1|$ differs from $|V1'|$, reproducing a variation of the amplitude of the sine S1 and cosine S2 signals generated by the sensors. This situation occurs in the presence of the edge effect, due to disturbances in the magnetic field generated by the magnets 10 with the windings 11.

Advantageously, according to the invention, even under conditions of the presence of edge effects, when analysed in a suitable manner the opening in the circle of the rotation vector V1 makes it possible to determine the step of the electric motor.

Upon start-up, according to the invention, owing to the preceding mapping procedure, there are two thresholds present in the control unit 100 of the electric motor, i.e., the first threshold Hx1 and the second threshold Hx2, to differentiate operation in the first or second step.

Advantageously, according to the invention, once the working thresholds have been established, the apparatus comprises a start module 113 configured to map a quadrature signal Sq1, Sq2 in an angular rotation vector V1 by means of a mathematical function $\sin^2+\cos^2$ upon start-up of the electric motor, thereby determining a current value of the angular vector Havv.

Advantageously, according to the invention, detection of the absolute position takes place without any movement of the electric motor.

In particular, the start module 113 is configured to:

- calculate a current angular phase shift value $\alpha$
- calculate the current $\sin^2+\cos^2 (\alpha)$ so as to obtain the current value of the angular vector Haw.

The second calculation module 112 comprises a comparison module 112c configured to compare the current value of the angular vector $H_{AVV}$ with the predefined first and second working threshold Hx1 and Hx2 to define the electric operating step P1 or P2 or P3.

Advantageously, according to the invention, the comparison module 112c is configured to compare the current value of the angular vector $H_{AVV}$ with the first and second working threshold Hx1 and Hx2.

The comparison is made based on the following conditions:

- if Haw $(\alpha)$ < Hx1 $(\alpha)$ $\rightarrow$ step P1
- if Hx1 $(\alpha)$ < Haw $(\alpha)$ < Hx2 $(\alpha)$ $\rightarrow$ step P2
- Haw $(\alpha)$ > Hx2 $(\alpha)$ $\rightarrow$ step P3

Once the correct values of $\alpha$ and step have been established, the control unit 100 determines the position of the linear electric motor 1, that is, it identifies the starting position of the linear electric motor.

Precisely, according to the invention, the control unit 100 comprises a positioning module 104 that is configured to determine a starting position POS of the electric motor 1, that is, to identify the starting position of the linear electric motor 1 as a function of:

- the angular phase shift value $\alpha$ detected by the first calculation module 111;

- the step P1, P2, P3 detected by said comparison module 112c

The starting position POS is the absolute starting position of the electric motor.

In other words, POS is the current position of the motor upon start-up.

In yet other words, POS is the distance between the current position of the motor and the origin of the axis.

The technical effect ensured by knowledge of the absolute position POS is that the motor does not need to make any movement for the zeroing thereof.

In the case where H1i= H2i = Hx1 ( or more generally in the case in which two calculated thresholds are of the same value), as shown for example in Figure 3b (for $\alpha \approx 70°$), in Figure 4 (for $\alpha \approx 55°$), in Figure 5a (for $\alpha \approx 50°$), in Figure 5b (for $\alpha \approx 225°$) and in Figure 5c (for $\alpha \approx 60°$), the calculated values are equal and therefore differentiation of the step is not possible in the specific angle; in this case only, the motor moves at an angle of about 10° greater within the electric step so as to make the calculation unambiguous, moving in the graphs to a point with a different angular value that ensures diversity also in the Hx detected.

According to the invention, based on the points demonstrated, it is possible to implement compensation for eccentricity and amplitude error. In fact, owing to knowledge of the absolute position POS, it is also possible to implement compensation for the circularity error (eccentricity), amplitude error and possible compensation for nonlinearity.

To eliminate the circularity and amplitude error, the sine and cosine functions can be re-mapped utilising the respective trigonometric function.

Owing to issues concerning computing speed, the LUT technique (Look-up Table) is typically used.

This technique envisages calculation of the exact values by processing the sine and cosine functions, and tabulating the values thereof in a matrix. The number of points in this matrix depends on the desired resolution. Normally, a total of at least 1024 points per revolution (360 degrees) ensures proper functioning.

This number can be implemented also by segmenting the goniometric circumference into 8 parts using a matrix of 128 points per segment, utilising the periodicity of the trigonometric functions.

To implement compensation, based on knowledge of the current angle, the two sine and cosine functions can be reconstructed and returned as output towards the controller (activation) analogically.

This brings about maximum compatibility with activations that do not involve additional complex calculation or tables within the calculation flow thereof.

Essentially, the control unit realises a reconstructed analogue signal, that is, a compensated analogue sine/cosine signal, which it transmits outwards.

In this case, the control unit, which is preferably integrated in the motor, reprojects the calculated angle by means of the arctan function on the time axis, utilising the equations:

$$sin(t) = cos(\alpha)$$

$$cos(t) = -sin(\alpha)$$

For compensation of nonlinearity, the table (LUT) of the sine and cosine can be created, compensating for deviations due to nonlinearities by using an external precision encoder, typically an optical line. This procedure can be carried out during calibration (mapping) of the axis, in the production stage, by means of equipment in which for each calculated datum of the internal encoder, the deviation referring to the external optical or magnetic line of reference is stored.

In this manner, the table utilised for reconstructing the sine and the cosine will contain compensation for the deviations.

In the case in which activation (control unit of the motor) were capable of implementing the above-mentioned algorithm, all compensation calculations could be carried out directly by tabulating the arctangent function with values acquired by the external encoder.

**Claims**

1. An identification method for identifying the absolute starting position of a linear electric motor (1) comprising the steps of:

    • providing a linear electric motor (1) comprising:

o a body (50) that extends along a longitudinal axis (A1-A1) of said motor (1);

o a rod (20) that is able to move coaxially with said longitudinal axis (A1-A1);

o permanent magnets (10) integral with the rod (20);

o windings (11) housed in said body (50) and at least partially associated with said permanent magnets (10), wherein a relative movement of said magnets (10) and windings (11) creates a variable magnetic field that is detectable by a plurality of sensors (31, 32, 33, 34);

o wherein said plurality of magnetic field sensors (31, 32, 33, 34) are mounted in said body (50) in a position that is distal from said permanent magnets (10) with respect to said windings (11), so that said plurality of sensors (31, 32, 33, 34) faces said permanent magnets (10) without the interposition of said windings, and wherein said rod (20) is able to be moved between :

- a first position (I), wherein said plurality of sensors (31, 32, 33, 34) are capable of generating a first substantially unaltered quadrature signal (Sq1) as a function of the magnetic field detected, said first quadrature signal being representative of the fact that the electric motor (1) is in a first electric step (P1);
- a second position, wherein said plurality of sensors (31, 32, 33, 34) are capable of generating a second quadrature signal (Sq2) in an altered form as a function of the magnetic field detected, said second quadrature signal being representative of the fact that the electric motor (1) is in a second electric step (P2);

wherein said plurality of sensors (31, 32, 33, 34) are positioned so as to face said permanent magnets (10) over said two electric steps (P1, P2) of said linear motor (1);

• mapping, only once during the production stage, the positions of the electric motor (1) by means of the following steps:

◦ mapping said quadrature signal (Sq1, Sq2) in an angular rotation vector (V1) by means of a mathematical function sin^2+cos^2;

◦ calculating an angular phase shift value ($\alpha$) by means of an arctg function of said quadrature signals (Sq1, Sq2), thereby determining the position of the motor within an electric step (P1, P2, P3);

◦ calculating respective values of said mapped quadrature signals (Sq1, Sq2);

◦ calculating at least one or more among:

- a working threshold (Hx1), where Hx1=(H1i+H2i)/2 is representative of an intermediate value of said quadrature signal (Sq1, Sq2) over said first electric step (P1) and said second electric step (P2) of said electric motor (1);
- a working threshold (Hx2), where Hx2=(H2i+H3i)/2 is representative of an intermediate value of said quadrature signal (Sq1, Sq2) over said second electric step (P2) and a third electric step (P3) of said electric motor (1)

wherein H1i, H2i and H3i are calculated values, and the index i ranges from i = 0-360°;

• upon start-up of the motor and without any movement of said motor,

◦ converting said quadrature signal (Sq1, Sq2) into an angular rotation vector (V1) by means of a mathematical function sin^2+cos^2, thus determining a current value of the angular vector (Haw);

◦ calculating a current angular phase shift value ($\alpha$);

◦ calculating current sin^2+cos^2 ($\alpha$) to obtain said current value of the angular vector (Havv);

◦ comparing said current value of the angular vector ($H_{AVV}$) with said predefined working threshold (Hx1) so as to define the electric operating step (P1, P2, P3);

◦ determining the starting position (POS) of the electric motor (1) as a function of:

- said detected angular phase shift value;
- said detected step (P1, P2, P3),

thereby identifying the absolute starting position of said linear electric motor (1).

2. The identification method according to claim 1, wherein the step of comparing said current value of the angular vector ($H_{AVV}$) with said working threshold (Hx1) envisages that

- if Haw ($\alpha$) < Hx1 ($\alpha$) →, then the electric motor (1) is in the first electric step (P1);
- if Hx1($\alpha$) < Havv ($\alpha$) < Hx2 ($\alpha$) →, then the electric motor (1) is in the second electric step (P2);
- if Havv ($\alpha$) > Hx2 ($\alpha$) →, then the electric motor (1) is in the third electric step (P3).

3. The identification method according to claim 1 or 2, wherein said quadrature signal (Sq1, Sq2) comprises a first sine signal (S1) and a second cosine signal (S2), which is 90° out of phase with respect to said first sine signal (S1).

4. The identification method according to any one of the preceding claims, wherein said linear electric motor (1) is a tubular linear electric motor.

5. The identification method according to any one of claims 1 to 3, wherein said linear electric motor (1) is a flat linear electric motor.

6. An identification apparatus configured to identify the absolute starting position of a linear electric motor (1), for implementation of the method according to any one of claims 1 to 5, wherein said apparatus comprises said linear electric motor (1), which, in turn, comprises:

  • a body (50) that extends along a longitudinal axis (A1-A1) of said motor (1);
  • a rod (20) that is able to move coaxially with said longitudinal axis (A1-A1);
  • permanent magnets (10) integral with the rod (20);
  • windings (11) housed in said body (50) and at least partially associated with said permanent magnets (10), wherein a relative movement of said permanent magnets (10) and windings (11) creates a variable magnetic field that is detectable by a plurality of sensors (31, 32, 33, 34);
  • said plurality of magnetic field sensors (31, 32, 33, 34) mounted in said body (50) in a position that is distal from said permanent magnets (10) with respect to said windings (11), so that said plurality of sensors (31, 32, 33, 34) faces said permanent magnets (10) without the interposition of said windings, and wherein said rod (20) is able to be moved between:

    ◦ a first position (I), wherein said plurality of sensors (31, 32, 33, 34) are capable of generating a first substantially unaltered quadrature signal (Sq1) as a function of the magnetic field detected; said first quadrature signal being representative of the fact that the electric motor (1) is in a first electric step (P1);
    ◦ a second position, wherein said plurality of sensors (31, 32, 33, 34) are capable of generating a second quadrature signal (Sq2) in an altered form as a function of the magnetic field detected, said second quadrature signal being representative of the fact that the electric motor (1) is in a second electric step (P2) of the motor (1);

    **characterised in that** said plurality of sensors (31, 32, 33, 34) are positioned so as to face said permanent magnets (10) over said two electric steps (P1, P2) of said linear motor (1);
    wherein the apparatus comprises a control unit (100), in data communication with said linear motor (1) via said plurality of sensors (31, 32, 33, 34), wherein the control unit (100) is provided with a second calculation module (112) comprising:
    • a mapping module (112a) configured to:

      ◦ map, only once during the production stage, said quadrature signal (Sq1, Sq2) in an angular rotation vector (V1) by means of a mathematical function $\sin^2 + \cos^2$.
      ◦ calculate said angular phase shift value ($\alpha$) and said respective values of said mapped quadrature signals (Sq1, Sq2);
      ◦ calculate one or more among:

        • a working threshold (Hx1), where Hx=(H1 i+H2i)/2 is representative of an intermediate value of said quadrature signal (Sq1, Sq2) over said first step (P1) and said second step (P2) of said electric motor (1);
        • a working threshold (Hx2), where Hx=(H2i+H3i)/2 is representative of an intermediate value of said quadrature signal (Sq1, Sq2) over said second step (P2) and a third step (P3) of said electric motor (1)

      wherein H1i, H2i and H3i are calculated values, and the index i ranges from i = 0-360°

7. The identification apparatus according to claim 6, wherein the control unit (100) is in data communication with said linear motor (1) via said plurality of sensors (31, 32, 33, 34), wherein said control unit comprises:

• a first acquisition module (101) configured to acquire said quadrature signals (Sq1, Sq2) from said plurality of sensors (31, 32, 33, 34), wherein said first signal (Sq1) is a sine signal and equal to the sum of the outputs of a first pair of sensors (31, 33) of said plurality, whereas the second signal (Sq2) is a cosine signal and equal to the sum of the outputs of a second pair of sensors (32 and 34) of said plurality;

• a first calculation module (111) configured to determine a position of the electric motor as a function of said acquired quadrature signals (Sq1, Sq2), said position being represented by an angular phase shift value ($\alpha$) of said signals (Sq1, Sq2) with respect to the electrical zero within the electric step (P1, P2, P3).

8. The identification apparatus according to claim 7, wherein:

• said first calculation module (111) is configured to calculate said angular phase shift value ($\alpha$) by means of an arctg function of said quadrature signals (Sq1, Sq2), thereby determining the position of the motor within an electric step (P1, P2, P3).

9. The identification apparatus according to claim 7, wherein said control unit (100) further comprises:

• a second acquisition module (102) configured to detect said electric step (P2, P2) from said quadrature signal (Sq1, Sq2) acquired from said plurality of sensors (31, 32, 33, 34);

• a second calculation module (112) configured to determine the position (POS) of the electric motor as a function of the values generated by said first calculation module (111) and said second acquisition module (102).

10. The identification apparatus according to anyone of claims 6 to 9, comprising a start module (113) configured to map said quadrature signal (Sq1, Sq2) in an angular rotation vector (V1) by means of a mathematical function sin^2+cos^2 upon start-up of said electric motor (1), thus determining a current value of the angular vector (Haw).

11. The identification apparatus according to claim 10, wherein said start module (113) is configured to:

• calculate a current angular phase shift value ($\alpha$)

• calculate the current sin^2+cos^2 ($\alpha$) so as to obtain said current value of the angular vector (Havv).

12. The identification apparatus according to anyone of claims 6 to 11 , wherein said second calculation module (112) comprises

• a comparison module (112c) configured to compare said current value of the angular vector ($H_{AVV}$) with one or more among:

o said first predefined working threshold (Hx1) so as to define the electric operating step (P1, P2)

o said second predefined working threshold (Hx2) so as to define the electric operating step (P2, P3).

13. The identification apparatus according to claim 12, wherein said one comparison module (112c) is configured to compare said current value of the angular vector ($H_{AVV}$) with one or more among said first and second working thresholds (Hx1, Hx2), and wherein said comparison envisages that

▪ if Haw ($\alpha$) < Hx1 ($\alpha$) $\rightarrow$, then the electric motor (1) is in the first electric step (P1);

▪ if Hx1 ($\alpha$) < Haw ($\alpha$) < Hx2 ($\alpha$) $\rightarrow$, then the electric motor (1) is in the second electric step (P2);

▪ if Havv ($\alpha$) > Hx2 ($\alpha$) $\rightarrow$, then the electric motor (1) is in the third electric step (P3).

14. The identification apparatus according to any one of claims 6 to 13, wherein said control unit (100) comprises a positioning module (104) configured to determine a starting position (POS) of the electric motor (1) as a function of:

• said angular phase shift value ($\alpha$) detected by said first calculation module (111) ;

• said step (P1, P2, P3) detected by said comparison module (112c),

thereby identifying the absolute starting position of said linear electric motor (1).

**Patentansprüche**

1. Identifizierungsverfahren zur Identifizierung der absoluten Start-Position eines elektrischen Linearmotors (1), umfassend die folgenden Schritte:

   • Bereitstellung eines elektrischen Linearmotors (1), umfassend:

   ◦ einen Körper (50), der sich entlang einer Längsachse (A1-A1) des Motors (1) erstreckt;
   ◦ einen Stab (20), der zu einer koaxialen Bewegung mit der Längsachse (A1-A1) fähig ist;
   ◦ Permanentmagneten (10), die einstückig mit dem Stab (20) verbunden sind;
   ◦ Wicklungen (11), die im Körper (50) aufgenommen sind und zumindest teilweise mit den Permanentmagneten (10) verbunden sind, wobei eine relative Bewegung der Magneten (10) und Wicklungen (11) zur Bildung eines variablen Magnetfelds führt, das durch eine Vielzahl von Sensoren (31, 32, 33, 34) detektierbar ist;
   ◦ wobei die Vielzahl von Magnetfeldsensoren (31, 32, 33, 34) im Körper (50) in einer Position montiert ist, die von den Permanentmagneten (10) in Bezug auf die Wicklungen (11) distal entfernt ist, sodass die Vielzahl von Sensoren (31, 32, 33, 34) den Permanentmagneten (10) ohne dazwischenliegende Wicklungen zugewandt ist, und wobei der Stab (20) dazu fähig ist, bewegt zu werden zwischen:

   ▪ einer ersten Position (I), in der die Vielzahl von Sensoren (31, 32, 33, 34) dazu fähig ist, ein erstes im Wesentlichen unverändertes Quadratursignal (Sq1) in Abhängigkeit des detektierten Magnetfelds zu erzeugen, wobei das erste Quadratursignal für die Tatsache repräsentativ ist, dass der Elektromotor (1) in einem ersten elektrischen Schritt (P1) ist;
   ▪ einer zweiten Position, in der die Vielzahl von Sensoren (31, 32, 33, 34) dazu fähig ist, ein zweites Quadratursignal (Sq2) in veränderter Form in Abhängigkeit des detektierten Magnetfelds zu erzeugen, wobei das zweite Quadratursignal für die Tatsache repräsentativ ist, dass der Elektromotor (1) in einem zweiten elektrischen Schritt (P2) ist;

   wobei die Vielzahl von Sensoren (31, 32, 33, 34) so positioniert ist, dass sie den Permanentmagneten (10) über die zwei elektrischen Schritte (P1, P2) des Linearmotors (1) hinweg zugewandt ist;
   • Abbildung, nur ein Mal während der Produktionsphase, der Positionen des Elektromotors (1) mithilfe der folgenden Schritte:

   ◦ Abbildung des Quadratursignals (Sq1, Sq2) in einem Drehwinkelvektor (V1) mithilfe einer mathematischen Funktion sin^2+cos^2;
   ◦ Berechnung eines Winkelphasenverschiebungswertes ($\alpha$) mithilfe einer arctg-Funktion des Quadratursignals (Sq1, Sq2), wodurch die Position des Motors innerhalb eines elektrischen Schritts (P1, P2, P3) bestimmt wird;
   ◦ Berechnung entsprechender Werte der abgebildeten Quadratursignale (Sq1, Sq2);
   ◦ Berechnung von mindestens einem oder mehreren aus:

   ▪ einem Arbeitsschwellenwert (Hx1), bei dem Hx1=(H1i+H2i)/2 für einen Zwischenwert des Quadratursignals (Sq1, Sq2) über den ersten elektrischen Schritt (P1) und den zweiten elektrischen Schritt (P2) des Elektromotors (1) hinweg repräsentativ ist;
   ▪ einem Arbeitsschwellenwert (Hx2), bei dem Hx2=(H2i+H3i)/2 für einen Zwischenwert des Quadratursignals (Sq1, Sq2) über den zweiten elektrischen Schritt (P2) und einen dritten elektrischen Schritt (P3) des Elektromotors (1) hinweg repräsentativ ist;

   wobei H1i, H2i und H3i berechnete Werte sind und der Index i von i = 0-360° reicht;

   • beim Starten des Motors und ohne jegliche Bewegung des Motors:

   ◦ Umwandlung des Quadratursignals (Sq1, Sq2) in einen Drehwinkelvektor (V1) mithilfe einer mathematischen Funktion sin^2+cos^2, wodurch ein aktueller Wert des Winkelvektors (Havv) bestimmt wird;
   ◦ Berechnung eines aktuellen Winkelphasenverschiebungswertes ($\alpha$);
   ◦ Berechnung der aktuellen sin^2+cos^2 ($\alpha$) zum Erhalten des aktuellen Wertes des Winkelvektors (Havv);
   ◦ Vergleichen des aktuellen Wertes des Winkelvektors ($H_{AVV}$) mit dem vorher bestimmten Arbeitsschwellenwert (Hx1), sodass der elektrische Betriebsschritt (P1, P2, P3) definiert wird;

◦ Bestimmen der Start-Position (POS) des Elektromotors (1) in Abhängigkeit von:

  ▪ dem detektierten Winkelphasenverschiebungswert;
  ▪ dem detektierten Schritt (P1, P2, P3),

wodurch die absolute Start-Position des elektrischen Linearmotors (1) identifiziert wird.

2. Identifizierungsverfahren nach Anspruch 1, wobei der Schritt des Vergleichens des aktuellen Wertes des Winkelvektors ($H_{AVV}$) mit dem Arbeitsschwellenwert (Hx1) Folgendes vorsieht:

  ▪ wenn Havv ($\alpha$) < Hx1 ($\alpha$) → dann ist der Elektromotor (1) im ersten elektrischen Schritt (P1);
  ▪ wenn Hx1 ($\alpha$) < Havv ($\alpha$) < Hx2 ($\alpha$) → dann ist der Elektromotor (1) im zweiten elektrischen Schritt (P2);
  ▪ wenn Havv ($\alpha$) < Hx2 ($\alpha$) → dann ist der Elektromotor (1) im dritten elektrischen Schritt (P3) .

3. Identifizierungsverfahren nach Anspruch 1 oder 2, wobei das Quadratursignal (Sq1, Sq2) ein erstes Sinussignal (S1) und ein zweites Kosinussignal (S2), das in Bezug auf das erste Sinussignal (S1) um 90° phasenverschoben ist, umfasst.

4. Identifizierungsverfahren nach einem der vorangehenden Ansprüche, wobei der elektrische Linearmotor (1) ein rohrförmiger elektrischer Linearmotor ist.

5. Identifizierungsverfahren nach einem der Ansprüche 1 bis 3, wobei der elektrische Linearmotor (1) ein flacher elektrischer Linearmotor ist.

6. Identifizierungsvorrichtung, die zur Identifizierung der absoluten Start-Position eines elektrischen Linearmotors (1) konfiguriert ist, zur Implementierung des Verfahrens nach einem der Ansprüche 1 bis 5, wobei die Vorrichtung den elektrischen Linearmotor (1) umfasst, der wiederum Folgendes umfasst:

  • einen Körper (50), der sich entlang einer Längsachse (A1-A1) des Motors (1) erstreckt;
  • einen Stab (20), der zu einer koaxialen Bewegung mit der Längsachse (A1-A1) fähig ist;
  • Permanentmagneten (10), die einstückig mit dem Stab (20) verbunden sind;
  • Wicklungen (11), die im Körper (50) aufgenommen sind und zumindest teilweise mit den Permanentmagneten (10) verbunden sind, wobei eine relative Bewegung der Permanentmagneten (10) und Wicklungen (11) zur Bildung eines durch eine Vielzahl von Sensoren (31, 32, 33, 34) detektierbaren, variablen Magnetfelds führt;
  • wobei die Vielzahl von Magnetfeldsensoren (31, 32, 33, 34) im Körper (50) in einer Position montiert ist, die von den Permanentmagneten (10) in Bezug auf die Wicklungen (11) distal entfernt ist, sodass die Vielzahl von Sensoren (31, 32, 33, 34) den Permanentmagneten (10) ohne dazwischenliegende Wicklungen zugewandt ist, und wobei der Stab (20) dazu fähig ist, bewegt zu werden zwischen:

    o einer ersten Position (I), in der die Vielzahl von Sensoren (31, 32, 33, 34) dazu fähig ist, ein erstes im Wesentlichen unverändertes Quadratursignal (Sq1) in Abhängigkeit des detektierten Magnetfelds zu erzeugen, wobei das erste Quadratursignal für die Tatsache repräsentativ ist, dass der Elektromotor (1) in einem ersten elektrischen Schritt (P1) ist;
    ◦ einer zweiten Position, in der die Vielzahl von Sensoren (31, 32, 33, 34) dazu fähig ist, ein zweites Quadratursignal (Sq2) in veränderter Form in Abhängigkeit des detektierten Magnetfelds zu erzeugen, wobei das zweite Quadratursignal für die Tatsache repräsentativ ist, dass der Elektromotor (1) in einem zweiten elektrischen Schritt (P2) des Motors (1) ist;

  **dadurch gekennzeichnet, dass** die Vielzahl von Sensoren (31, 32, 33, 34) so positioniert ist, dass sie den Permanentmagneten (10) über die zwei elektrischen Schritte (P1, P2) des Linearmotors (1) hinweg zugewandt ist;
  wobei die Vorrichtung eine Steuereinheit (100) umfasst, die über die Vielzahl von Sensoren (31, 32, 33, 34) mit dem Linearmotor (1) in Datenkommunikation steht, wobei die Steuereinheit (100) mit einem zweiten Berechnungsmodul (112) bereitgestellt ist, umfassend:
  • ein Abbildungsmodul (112a), das zu Folgendem konfiguriert ist:

    ◦ Abbildung, nur ein Mal während der Produktionsphase, des Quadratursignals (Sq1, Sq2) in einem Drehwinkelvektor (V1) mithilfe einer mathematischen Funktion sin^2+cos^2;

○ Berechnung des Winkelphasenverschiebungswertes ($\alpha$) und der entsprechenden Werte der abgebildeten Quadratursignale (Sq1, Sq2);

○ Berechnung von mindestens einem oder mehreren aus:

• einem Arbeitsschwellenwert (Hx1), bei dem Hx1=(H1i+H2i)/2 für einen Zwischenwert des Quadratursignals (Sq1, Sq2) über den ersten Schritt (P1) und den zweiten Schritt (P2) des Elektromotors (1) hinweg repräsentativ ist;

• einem Arbeitsschwellenwert (Hx2), bei dem Hx2=(H2i+H3i)/2 für einen Zwischenwert des Quadratursignals (Sq1, Sq2) über den zweiten Schritt (P2) und einen dritten Schritt (P3) des Elektromotors (1) hinweg repräsentativ ist;

wobei H1i, H2i und H3i berechnete Werte sind und der Index i von i = 0-360° reicht.

**7.** Identifizierungsvorrichtung nach Anspruch 6, die über die Vielzahl von Sensoren (31, 32, 33, 34) mit dem Linearmotor (1) in Datenkommunikation stehende Steuereinheit (100) ist, wobei die Steuereinheit Folgendes umfasst:

• ein erstes Erfassungsmodul (101), das dazu konfiguriert ist, die Quadratursignale (Sq1, Sq2) von der Vielzahl von Sensoren (31, 32, 33, 34) zu erfassen, wobei das erste Signal (Sq1) ein Sinussignal ist, das der Summe der Ausgaben eines ersten Paares von Sensoren (31, 33) der Vielzahl entspricht, während das zweite Signal (Sq2) ein Kosinussignal ist, das der Summe der Ausgaben eines zweiten Paares von Sensoren (32 und 34) der Vielzahl entspricht;

• ein erstes Berechnungsmodul (111), das dazu konfiguriert ist, eine Position des Elektromotors in Abhängigkeit des erfassten Quadratursignals (Sq1, Sq2) zu bestimmen, wobei die Position von einem Winkelphasenverschiebungswert ($\alpha$) der Signale (Sq1, Sq2) in Bezug auf den elektrischen Nullpunkt innerhalb des elektrischen Schritts (P1, P2, P3) repräsentiert wird.

**8.** Identifizierungsvorrichtung nach Anspruch 7, wobei:

• das erste Berechnungsmodul (111) dazu konfiguriert ist, den Winkelphasenverschiebungswert ($\alpha$) mithilfe einer arctg-Funktion der Quadratursignale (Sq1, Sq2) zu berechnen, wodurch die Position des Motors innerhalb eines elektrischen Schritts (P1, P2, P3) bestimmt wird.

**9.** Identifizierungsvorrichtung nach Anspruch 7, wobei die Steuereinheit (100) ferner Folgendes umfasst:

• ein zweites Erfassungsmodul (102), das dazu konfiguriert ist, den elektrischen Schritt (P1, P2) vom von der Vielzahl von Sensoren (31, 32, 33, 34) erfassten Quadratursignal (Sq1, Sq2) zu detektieren;

• ein zweites Berechnungsmodul (112), das dazu konfiguriert ist, die Position (POS) des Elektromotors in Abhängigkeit der vom ersten Berechnungsmodul (111) und vom zweiten Erfassungsmodul (102) erzeugten Werte zu bestimmen.

**10.** Identifizierungsvorrichtung nach einem der Ansprüche 6 bis 9, umfassend ein Startmodul (113), das dazu konfiguriert ist, das Quadratursignal (Sq1, Sq2) in einem Drehwinkelvektor (V1) mithilfe einer mathematischen Funktion sin^2+cos^2 beim Starten des Elektromotors (1) abzubilden, wodurch ein aktueller Wert des Winkelvektors (Havv) bestimmt wird.

**11.** Identifizierungsvorrichtung nach Anspruch 10, wobei das Startmodul (113) zu Folgendem konfiguriert ist:

• Berechnung eines aktuellen Winkelphasenverschiebungswertes ($\alpha$);

• Berechnung der aktuellen sin^2+cos^2 ($\alpha$) zum Erhalten des aktuellen Wertes des Winkelvektors (Havv).

**12.** Identifizierungsvorrichtung nach einem der Ansprüche 6 bis 11, wobei das zweite Berechnungsmodul (112) Folgendes umfasst:

■ ein Vergleichsmodul (112c), das dazu konfiguriert ist, den aktuellen Wert des Winkelvektors ($H_{AVV}$) mit einem oder mehreren des Folgenden zu vergleichen:

o den ersten vorher bestimmten Arbeitsschwellenwert (Hx1), sodass der elektrische Betriebsschritt (P1, P2) definiert wird;

o den zweiten vorher bestimmten Arbeitsschwellenwert (Hx2), sodass der elektrische Betriebsschritt (P2, P3) definiert wird.

13. Identifizierungsvorrichtung nach Anspruch 12, wobei das eine Vergleichsmodul (112c) dazu konfiguriert ist, den aktuellen Wert des Winkelvektors ($H_{AVV}$) mit einem oder mehreren des ersten und zweiten Arbeitsschwellenwertes (Hx1, Hx2) zu vergleichen und wobei der Vergleich Folgendes vorsieht:

- wenn Havv ($\alpha$) < Hx1 ($\alpha$) → dann ist der Elektromotor (1) im ersten elektrischen Schritt (P1);
- wenn Hx1 ($\alpha$) < Havv ($\alpha$) < Hx2 ($\alpha$) → dann ist der Elektromotor (1) im zweiten elektrischen Schritt (P2) ;
- wenn Havv ($\alpha$) < Hx2 ($\alpha$) → dann ist der Elektromotor (1) im dritten elektrischen Schritt (P3) .

14. Identifizierungsvorrichtung nach einem der Ansprüche 6 bis 13, wobei die Steuereinheit (100) ein Positioniermodul (104) umfasst, das dazu konfiguriert ist, eine Start-Position (POS) des Elektromotors (1) in Abhängigkeit von Folgendem zu bestimmen:

• dem vom ersten Berechnungsmodul (111) detektierten Winkelphasenverschiebungswert ($\alpha$);
• dem vom Vergleichsmodul (112c) detektierten Schritt (P1, P2, P3),

wodurch die absolute Start-Position des elektrischen Linearmotors (1) identifiziert wird.

**Revendications**

1. Procédé d'identification destiné à identifier la position de démarrage absolue d'un moteur électrique linéaire (1) comprenant les étapes de :

• prévoir un moteur électrique linéaire (1) comprenant :

◦ un corps (50) qui se développe le long d'un axe longitudinal (A1-A) dudit moteur (1) ;
◦ une tige (20) pouvant se déplacer coaxialement avec ledit axe longitudinal (A1-A) ;
o des aimants permanents (10) solidaires de la tige (20) ;
o des enroulements (11) logés dans ledit corps (50) et au moins partiellement associés auxdits aimants permanents (10), dans lequel un mouvement relatif desdits aimants (10) et des enroulements (11) crée un champ magnétique variable étant détectable par une pluralité de capteurs (31, 32, 33, 34) ;
o dans lequel ladite pluralité de capteurs de champ magnétique (31, 32, 33, 34) sont montés dans ledit corps (50) dans une position étant distale desdits aimants permanents (10) par rapport auxdits enroulements (11), de sorte que ladite pluralité de capteurs (31, 32, 33, 34) font face auxdits aimants permanents (10) sans l'interposition desdits enroulements, et dans lequel ladite tige (20) peut être déplacée enture :

- une première position (1), dans laquelle ladite pluralité de capteurs (31, 32, 33, 34) sont en mesure de générer un premier signal en quadrature substantiellement non modifié (Sq1) en fonction du champ magnétique détecté, ledit premier signal en quadrature étant représentatif du fait que le moteur électrique (1) est dans un premier pas électrique (P1) ;
- une seconde position, dans laquelle ladite pluralité de capteurs (31, 32, 33, 34) sont en mesure de générer un second signal en quadrature (Sq2) sous une forme modifiée en fonction du champ magnétique détecté, ledit second signal en quadrature étant représentatif du fait que le moteur électrique (1) est dans un second pas électrique (P2) ;

dans lequel ladite pluralité de capteurs (31, 32, 33, 34) sont positionnés de manière à faire face auxdits aimants permanents (10) sur lesdits deux pas électriques (P1, P2) dudit moteur linéaire (1) ;

• effectuer le mappage, une seule fois lors de l'étape de production, des positions du moteur électrique (1) par le biais des étapes suivantes :

◦ effectuer le mappage dudit signal en quadrature (Sq1, Sq2) dans un vecteur de rotation angulaire (V1) par l'intermédiaire d'une fonction mathématique sin^2+cos^2 ;
◦ calculer une valeur angulaire de déphasage ($\alpha$) par l'intermédiaire d'une fonction arc Tg desdits signaux en quadrature (Sq1, Sq2), déterminant ainsi la position du moteur à l'intérieur d'un pas électrique (P1, P2, P3) ;
◦ calculer les valeurs respectives desdits signaux en quadrature mappés (Sq1, Sq2) ;
◦ calculer au moins l'un ou plusieurs des seuils parmi :

■ un seuil de fonctionnement (Hx1), où Hx1= (H1i+H2i)/2 est représentatif d'une valeur intermédiaire dudit signal en quadrature (Sq1, Sq2) sur ledit premier pas électrique (P1) et ledit second pas électrique (P2) dudit moteur électrique (1) ;
■ un seuil de fonctionnement (Hx2), où Hx2=(H2i+H3i)/2 est représentatif d'une valeur intermédiaire dudit signal en quadrature (Sq1, Sq2) sur ledit second pas électrique (P2) et un troisième pas électrique (P3) dudit moteur électrique (1), dans lequel H1i, H2i et H3i sont des valeurs calculées, et l'indice i varie de i = 0-360° ;

• au démarrage du moteur et sans mouvement dudit moteur,

◦ convertir ledit signal en quadrature (Sq1, Sq2) en un vecteur de rotation angulaire (V1) par l'intermédiaire d'une fonction mathématique sin^2+cos^2, déterminant ainsi une valeur actuelle du vecteur angulaire (Havv) ;
◦ calculer une valeur angulaire de déphasage actuelle ($\alpha$) ;
◦ calculer sin^2+cos^2 ($\alpha$) actuel pour obtenir ladite valeur actuelle du vecteur angulaire (Havv) ;
◦ comparer ladite valeur actuelle du vecteur angulaire ($H_{AVV}$) avec ledit seuil de fonctionnement prédéfini (Hx1) de manière à définir le pas de fonctionnement électrique (P1, P2, P3) ;
◦ déterminer la position de démarrage (POS) du moteur électrique (1) en fonction :

■ de ladite valeur angulaire de déphasage détectée ;
■ dudit pas détecté (P1, P2, P3),

identifiant ainsi la position de démarrage absolue dudit moteur électrique linéaire (1).

2. Procédé d'identification selon la revendication 1, dans lequel l'étape consistant à comparer ladite valeur actuelle du vecteur angulaire ($H_{AVV}$) avec ledit seuil de fonctionnement (Hx1) prévoit que

■ si Havv ($\alpha$) < Hx1 ($\alpha$) →, alors le moteur électrique (1) est dans le premier pas électrique (P1);
■ si Hx1 ($\alpha$) < Havv ($\alpha$) < Hx2 ($\alpha$) →, alors le moteur électrique (1) est dans le second pas électrique (P2) ;
■ si Havv ($\alpha$) > Hx2 ($\alpha$) →, alors le moteur électrique (1) est dans le troisième pas électrique (P3) .

3. Procédé d'identification selon la revendication 1 ou 2, dans lequel ledit signal en quadrature (Sq1, Sq2) comprend un premier signal sinusoïdal (S1) et un second signal cosinusoïdal (S2) étant déphasé de 90° par rapport au dit premier signal sinusoïdal (S1).

4. Procédé d'identification selon l'une quelconque des revendications précédentes, dans lequel ledit moteur électrique linéaire (1) est un moteur électrique linéaire tubulaire.

5. Procédé d'identification selon l'une quelconque des revendications de 1 à 3, dans lequel ledit moteur électrique linéaire (1) est un moteur électrique linéaire plat.

6. Appareil d'identification configuré pour identifier la position de démarrage absolue d'un moteur électrique linéaire (1), pour la mise en place du procédé selon l'une quelconque des revendications de 1 à 5, dans lequel ledit appareil comprend ledit moteur électrique linéaire (1), qui, à son tour, comprend :

• un corps (50) qui se développe le long d'un axe longitudinal (A1-A1) dudit moteur (1) ;
• une tige (20) pouvant se déplacer coaxialement avec ledit axe longitudinal (A1-A1) ;
• des aimants permanents (10) solidaires de la tige (20) ;
• des enroulements (11) logés dans ledit corps (50) et au moins partiellement associés auxdits aimants permanents (10), dans lequel un mouvement relatif desdits aimants permanents (10) et des enroulements (11) crée un champ magnétique variable étant détectable par une pluralité de capteurs (31, 32, 33, 34) ;
• ladite pluralité de capteurs de champ magnétique (31, 32, 33, 34) sont montés dans ledit corps (50) dans une position étant distale desdits aimants permanents (10) par rapport auxdits enroulements (11), de sorte que ladite pluralité de capteurs (31, 32, 33, 34) font face auxdits aimants permanents (10) sans l'interposition desdits enroulements, et dans lequel ladite tige (20) peut être déplacée entre :

o une première position (I), dans laquelle ladite pluralité de capteurs (31, 32, 33, 34) sont en mesure de générer un premier signal en quadrature substantiellement non modifié (Sq1) en fonction du champ magnétique détecté ; ledit premier signal en quadrature étant représentatif du fait que le moteur électrique (1) est dans un premier pas électrique (P1) ;

o une seconde position, dans laquelle ladite pluralité de capteurs (31, 32, 33, 34) sont en mesure de générer un second signal en quadrature (Sq2) sous une forme modifiée en fonction du champ magnétique détecté, ledit second signal en quadrature étant représentatif du fait que le moteur électrique (1) est dans un second pas électrique (P2) du moteur (1) ;

**caractérisé en ce que** ladite pluralité de capteurs (31, 32, 33, 34) sont positionnés de manière à faire face auxdits aimants permanents (10) sur lesdits deux pas électriques (P1, P2) dudit moteur linéaire (1) ; dans lequel l'appareil comprend une unité de commande (100), en communication de données avec ledit moteur linéaire (1) via ladite pluralité de capteurs (31, 32, 33, 34), dans lequel l'unité de commande (100) est pourvue d'un second module de calcul (112) comprenant :
• un module de mappage (112a) configuré pour :

◦ mapper, une seule fois lors de l'étape de production, ledit signal en quadrature (Sq1, Sq2) dans un vecteur de rotation angulaire (V1) par l'intermédiaire d'une fonction mathématique $\sin^2 + \cos^2$ ;
◦ calculer ladite valeur angulaire de déphasage ($\alpha$) et lesdites valeurs respectives desdits signaux en quadrature mappés (Sq1, Sq2) ;
◦ calculer l'un ou plusieurs des seuils parmi :

• un seuil de fonctionnement (Hx1), où Hx=(H1i+H2i)/2 est représentatif d'une valeur intermédiaire dudit signal en quadrature (Sq1, Sq2) sur ledit premier pas (P1) et ledit second pas (P2) dudit moteur électrique (1) ;
• un seuil de fonctionnement (Hx2), où Hx=(H2i+H3i)/2 est représentatif d'une valeur intermédiaire dudit signal en quadrature (Sq1, Sq2) sur ledit second pas (P2) et un troisième pas (P3) dudit moteur électrique (1),

dans lequel H1i, H2i et H3i sont des valeurs calculées, et l'indice i varie de i = 0-360° .

7. Appareil d'identification selon la revendication 6, dans lequel l'unité de commande (100) est en communication de données avec ledit moteur linéaire (1) via ladite pluralité de capteurs (31, 32, 33, 34), dans lequel ladite unité de commande comprend :

• un premier module d'acquisition (101) configuré pour acquérir lesdits signaux en quadrature (Sq1, Sq2) à partir de ladite pluralité de capteurs (31, 32, 33, 34), dans lequel ledit premier signal (Sq1) est un signal sinusoïdal et égal à la somme des sorties d'une première paire de capteurs (31, 33) de ladite pluralité, tandis que le second signal (Sq2) est un signal cosinusoïdal et égal à la somme des sorties d'une seconde paire de capteurs (32 et 34) de ladite pluralité ;
• un premier module de calcul (111) configuré pour déterminer une position du moteur électrique en fonction desdits signaux en quadrature acquis (Sq1, Sq2), ladite position étant représentée par une valeur angulaire de déphasage ($\alpha$) desdits signaux (Sq1, Sq2) par rapport au zéro électrique à l'intérieur du pas électrique (P1, P2, P3).

8. Appareil d'identification selon la revendication 7, dans lequel :

• ledit premier module de calcul (111) est configuré pour calculer ladite valeur angulaire de déphasage ($\alpha$) par l'intermédiaire d'une fonction arc Tg desdits signaux en quadrature (Sq1, Sq2), déterminant ainsi la position du moteur à l'intérieur d'un pas électrique (P1, P2, P3).

9. Appareil d'identification selon la revendication 7, dans lequel ladite unité de commande (100) comprend de plus :

• un second module d'acquisition (102) configuré pour détecter ledit pas électrique (P1, P2) à partir dudit signal en quadrature (Sq1, Sq2) acquis à partir de la pluralité de capteurs (31, 32, 33, 34) ;
• un second module de calcul (112) configuré pour déterminer la position (POS) du moteur électrique en fonction des valeurs générées par ledit premier module de calcul (111) et ledit second module d'acquisition (102).

**10.** Appareil d'identification selon l'une quelconque des revendications de 6 à 9, comprenant un module de démarrage (113) configuré pour mapper ledit signal en quadrature (Sq1, Sq2) dans un vecteur de rotation angulaire (V1) par l'intermédiaire d'une fonction mathématique sin^2+cos^2 au démarrage dudit moteur électrique (1), déterminant ainsi une valeur actuelle du vecteur angulaire (Havv).

**11.** Appareil d'identification selon la revendication 10, dans lequel ledit module de démarrage (113) est configuré pour :

• calculer une valeur angulaire de déphasage actuelle
($\alpha$) ;
• calculer sin^2+cos^2 ($\alpha$) actuel de manière à obtenir ladite valeur actuelle du vecteur angulaire (Havv).

**12.** Appareil d'identification selon l'une quelconque des revendications de 6 à 11, dans lequel ledit second module de calcul (112) comprend :

• un module de comparaison (112c) configuré pour comparer ladite valeur actuelle du vecteur angulaire ($H_{AVV}$) avec un ou plusieurs seuils parmi :

  ◦ ledit premier seuil de fonctionnement prédéfini (Hx1) de manière à définir le pas de fonctionnement électrique (P1, P2)
  ◦ ledit second seuil de fonctionnement prédéfini (Hx2) de manière à définir le pas de fonctionnement électrique (P2, P3).

**13.** Appareil d'identification selon la revendication 12, dans lequel ledit un module de comparaison (112c) est configuré pour comparer ladite valeur actuelle du vecteur angulaire ($H_{AVV}$) avec un ou plusieurs desdits premier et second seuils de fonctionnement (Hx1, Hx2), et dans lequel ladite comparaison prévoit que

  ▪ si Havv ($\alpha$) < Hx1 ($\alpha$) →, alors le moteur électrique (1) est dans le premier pas électrique (P1) ;
  ▪ si Hx1 ($\alpha$) < Havv ($\alpha$) < Hx2 ($\alpha$) →, alors le moteur électrique (1) est dans le second pas électrique (P2) ;
  ▪ si Havv ($\alpha$) > Hx2 ($\alpha$) →, alors le moteur électrique (1) est dans le troisième pas électrique (P3) .

**14.** Appareil d'identification selon l'une quelconque des revendications de 6 à 13, dans lequel ladite unité de commande (100) comprend un module de positionnement (104) configuré pour déterminer une position de démarrage (POS) du moteur électrique (1) en fonction :

• de ladite valeur angulaire de déphasage ($\alpha$) détectée par ledit premier module de calcul (111) ;
• dudit pas (P1, P2, P3) détecté par ledit module de comparaison (112c),

identifiant ainsi la position de démarrage absolue dudit moteur électrique linéaire (1).

Fig.1a

EP 2 789 984 B1

Fig.1b

# Fig.1c

EP 2 789 984 B1

Fig.2a

Fig.2b

Fig.2b1

Fig.2b2

EP 2 789 984 B1

Fig.3a

$\sin^2+\cos^2$

EP 2 789 984 B1

Fig.3b

Fig.4

Fig.5a

angle vs sin2+cos2 and thresholds

EP 2 789 984 B1

Fig.5b

angle vs sin2+cos2 and thresholds

EP 2 789 984 B1

Fig.5c

angle vs sin2+cos2 and thresholds

EP 2 789 984 B1

Fig.6

EP 2 789 984 B1

Fig.7

**EP 2 789 984 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1978633 A2